(19)

Europäisches
Patentamt
European
Patent Office
Office européen
des brevets

(11) **EP 1 739 604 A1**

(12) **EUROPEAN PATENT APPLICATION**

(43) Date of publication:
**03.01.2007 Bulletin 2007/01**

(51) Int Cl.:
***G06Q 10/00*** *(2006.01)*

(21) Application number: **05013989.8**

(22) Date of filing: **28.06.2005**

| | |
|---|---|
| (84) Designated Contracting States:<br>**AT BE BG CH CY CZ DE DK EE ES FI FR GB GR**<br>**HU IE IS IT LI LT LU MC NL PL PT RO SE SI SK TR**<br>Designated Extension States:<br>**AL BA HR LV MK YU** | (72) Inventor: **Yu, ming-Yu**<br>**Sinyi District**<br>**Taipei City (TW)** |
| (71) Applicant: **Spiritual Ocean International Group**<br>**Sinyi District**<br>**Taipei City (TW)** | (74) Representative: **Kador & Partner**<br>**Corneliusstrasse 15**<br>**80469 München (DE)** |

(54) **Discount system for installment of trade articles and method for the same**

(57)     A discount system for installment of trade articles and its method is proposed in the present invention. The discount system provides at least a first trade article and a second trade article. When the second consuming end purchases the second trade article after the first consuming end purchases the first trade article, an accumulative value is added by one to record the number of people who purchase the second trade articles. After that, a processing unit calculates a discount price according to the accumulative value so that the installment payment of the first consuming end is reduced correspondingly. Thereby, the profit of marketing the trade articles for the second consuming end is transferred partially to the first consuming end. In this way, the present invention can attract more consumers to purchase the articles.

EP 1 739 604 A1

**Description**

BACKGROUND OF THE INVENTION

1. Field of the Invention

The present invention is related to a discount system for installment of trade articles and its method, and more particularly, to system that an accumulative value to record the number of people who purchase the trade articles. Then, a discount price is calculated according to the accumulative value and an installment payment of the consuming end is reduced correspondingly. Thus, the system provides a discount for the consuming end during the installment period.

2. Description of Related Art

After business activities were developed, trade articles were usually marketed via a "push" method. The so-called "push" method is referred to that enterprises sell ("push") their articles to consumers actively. In this way, enterprises have more decision-making authorities. Thus, the prices of trade articles are mainly decided by enterprises themselves. Consumers can only accept the prices decided by the enterprises and cannot have more discounts.

However, since network technologies progress and electronic businesses are developed vigorously, the traditional transaction mode that had been used for thousands of years is changed and the cost for marketing is greatly reduced. Furthermore, the customers' consciousness is awakened and the competition in the market is keener and keener. Enterprises start to produce articles fulfilling the requirements of consumers to attract the consumers. It means that the marketing method is changed from "push" to 'pull". In this way, the consumers can have more decision-making authorities. Hence, enterprises, all without exception, think and provide more discount plans to attract more consumers for purchasing.

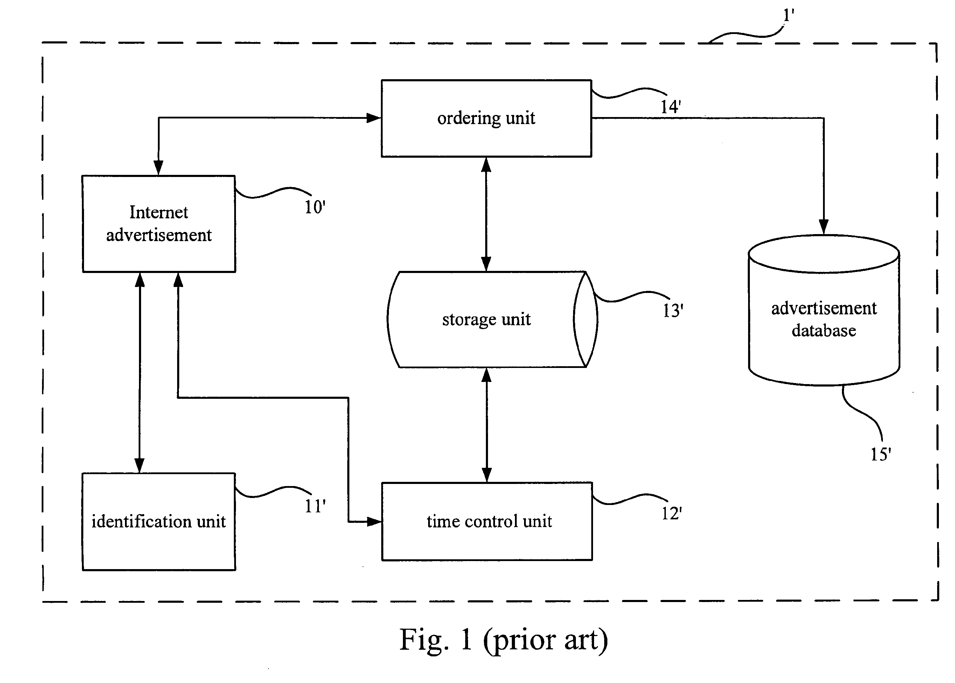

Reference is made to Fig. 1, which is a schematic diagram of a discount system for purchasing products on-line. The details of this discount system and the method thereof can be fount in Taiwan patent No. 535079. As shown in the figure, it provides an Internet discount mechanism 1' to offer a discount profit for people who purchase products on-line. The Internet discount mechanism 1' includes an identification unit 11', which is used to identify the identity of a consumer and record the personal information of the consumer to produce a personal account; a time control unit 12' used to record the surfing time of an Internet advertisement 10' provided by an advertisement database 15', wherein the time control unit 12' checks whether the Internet advertisement 10' is indeed browsed via the personal account and then counts time to produces a time signal; a storage unit 13' to record a number of browsing times of the Internet advertisement 10' and produce a frequency signal by employing the time signal; and an ordering unit 14' used for a user to order the product advertised by the Internet advertisement 10' and make the real price of the product be "fixed price* (1- a number of browsing times of the Internet advertisement* a specific percentage)". In this way, a discount profit is provided to attract consumers to purchase products.

Conventional discount systems used for purchasing products on-line usually provides discount profits for consumers when they purchase the products. However, for the consumers who choose to pay for the products via installment, the products that can be paid via installment are usually more expensive than other products. That is because the products that can be paid via installment have a risk that consumers cannot pay for the products at a time and it takes a more time for enterprises to obtain the total payment of the products. Thus, although conventional discount systems discount the products that can be paid via installment, the prices of the products that can be paid via installment are still higher than that of other products. Hence, consumers who want to purchase products that can be paid via installment may lose the desire to purchase products. For this sake, how to provide more discount profits for consumers during the installment periods so as to attract more consumers to purchase products has become an important issue for enterprises.

Therefore, how to provide a discount system for installment of trade articles and a method for the same to resolve the drawbacks of the prior art so as to improve upon that the conventional discount systems cannot provide more discount profits during installment periods has been desired for a long time. Accordingly, in view of the research, development and practical sale experiences of the related products for many years, the inventor of the present invention sought to improve the prior art. Via inventor's professional knowledge and his research, design and case study in many ways, the inventor finally proposes a discount system for installment of trade articles and a method for the same to resolve the drawback mentioned above.

SUMMARY OF THE INVENTION

An objective of the present invention is to provide a discount system for installment of trade articles and a method for the same. After a first consumer purchases a first product, when a second consumer purchases a second product, an accumulative value is increased to represent a total number of second consumers who have purchased the second products and a discount price is calculated according to the accumulative value so as to reduce an installment payment of the first consumer during the installment period. Thereby, a goal of attracting more consumers to purchase products is achieved.

Another objective of the present invention is to provide a discount system for installment of trade articles and a method for the same. In this system and method, a first consumer invites at least a second consumer for purchase. When the second consumer purchases products, the first consumer obtains a corresponding discount price. Thus, an installment payment of the first consumer is reduced during the installment period. In this way, due to the discount profit, the first consumer is driven to constantly invite the second consumers to purchase products. Thereby, a goal of making more consumers to purchase products is achieved.

Still another objective of the present invention is to provide a discount system for installment of trade articles and a method for the same. Therein, a transaction server is provided to advertise at least a first product and at a second product that are provided by the same enterprise and different enterprises. Thus, when the first consumer and the second consumer purchase products provided by different enterprises, the first consumer can still obtain a corresponding discount price.

For achieving the objectives above, the present invention provides a discount system for installment of trade articles and a method for the same. The system has a transaction server, which employs a web page to provide information of at least a first product and at least a second product for a first consumer. Then, the first consumer can purchase the first products via the transaction server. After that, when at least a second consumer purchases the second product, an accumulative value is increased to represent a total number of people who have purchased the second products. Then, a processor is used to calculate a discount price according to the accumulative value so as to reduce an installment payment of the first consumer. Thus, the first consumer who chooses to pay for the first product via installment can obtain more discount profit. In this way, a goal of attracting more consumers to purchase products is achieved.

Numerous additional features, benefits and details of the present invention are described in the detailed description, which follows.

BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:

Fig. 1 is a schematic diagram of a discount system for purchasing products on-line;
Fig. 2 is a flow chart of a preferred embodiment in accordance with the present invention;
Fig. 3 is a schematic diagram of a preferred embodiment in accordance with the present invention;
Fig. 4 is a flow chart of the present invention, wherein a first consumer invites second consumers to purchase products and thereby obtain a corresponding discount price;
Fig. 5 is a schematic diagram of the present invention, wherein a first consumer invites second consumers to purchase products and thereby obtain a corresponding discount price;
Fig. 6a is a schematic diagram of the present invention, wherein a first enterprise provides same products for consumers;
Fig. 6b is a schematic diagram of the present invention, wherein a first enterprise provides different products for consumers;
Fig. 7 is a flow chart of the present invention, wherein a first consumer and a second consumer use a transaction server to purchase products;
Fig. 8 is a schematic diagram of the present invention, wherein a first consumer and a second consumer use a transaction server to purchase products;
Fig. 9a is a schematic diagram of the present invention, wherein a first enterprise provides same products for purchase of consumers via a transaction server;
Fig. 9b is a schematic diagram of the present invention, wherein a first enterprise provides different products for purchase of consumers via a transaction server; and
Fig. 10 is a schematic diagram of the present invention, wherein a first enterprise and a second enterprise provide different products for purchase of consumers via a transaction server.

DETAILED DESCRIPTION OF PREFERRED EMBODIMENTS

In the prior art, most of enterprises provide discounts for consumers only when marketing products. The present invention is different to the prior art. It provides discount during the installment period. Thus, a consumer's installment payment can be reduced to make the consumer have more desire of purchase. Hence, the goal of attracting consumers to purchase trades articles is achieved.

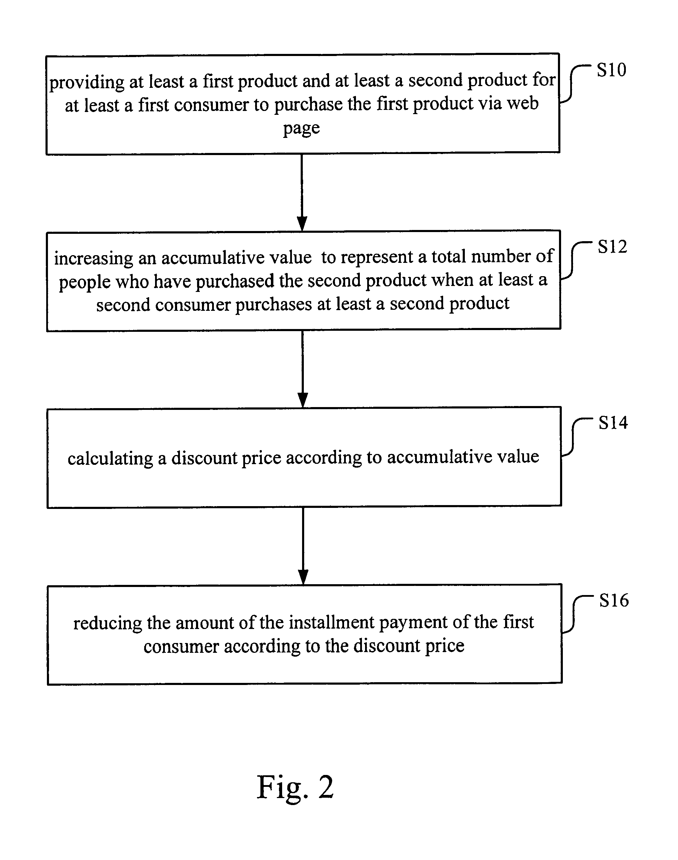

Reference is made to Fig. 2, which is a flow chart of a preferred embodiment in accordance with the present invention. This embodiment uses a installment method as an example of the paying method of at least a first product. The method of the present invention has following steps.

First, in step S 10, the present invention provides at least a first product and at least a second product for at least a first consumer to purchase the first product via web page. Then, in step S12, when at least a second consumer purchases at least a second product, an accumulative value is increased to represent a total number of people who have purchased the second product. Subsequently, step S 14 is performed to multiply the accumulative value with a predetermined percentage to obtain a discount ratio. Thereby, the present invention can calculate a discount price according to the price of the first product or the amount of the installment payment of the first consumer. Finally, in step S16, according to the discount price, the amount of the installment payment of the first consumer can be reduced. Thus, the amount of the installment payment of the first consumer can be adjusted dynamically

The present invention calculates the discount price via daily settlement, monthly settlement or yearly settlement. Each time when the time for settlement is reached, the discount price is calculated according to the accumulative value used in step S14. Furthermore, the installment payment can be calculated via one of formulas (1)-(5). Therein, if formula (1) is used, the first consumer needs to pay the same amount of installment payment for the principal and its interest of the first product at each time. If formula (2) is used, the first consumer pays a part of the principal in advance and then pays the same amount of installment payment for the remaining principal and its interest of the first product at each time, in which the interest is decreased each time when the installment payment is paid. If formula (3) is used, the first consumer pays the same amount of installment payment for the principal and its interest of the first product at each time, in which the interest is decreased each time when the installment payment is paid. If formula (4) is used, the first consumer pays the same amount of installment payment for the interest of the first product at each time and the principal of the first product can be paid later after a predetermined time period. Finally, if formula (5) is used, the first consumer pays the same amount of installment payment for the principal of the first product at each time.

Formulas (1)-(5) is shown as follows:

$$\text{the installment payment} = \frac{\text{price of the first product} + \text{total interest of the first product}}{\text{total times of intallments}} ; \tag{1}$$

$$\text{the installment payment} = \frac{\text{outstanding of the first product}}{\text{remaining times of intallments}} + \text{interest}; \tag{2}$$

$$\text{the installment payment} = \frac{\text{price of the first product}}{\text{total times of intallments}} + \text{interest}; \tag{3}$$

$$\text{the installment payment} = \frac{\text{total interest of the first product}}{\text{total times of intallments}} ; \text{and} \tag{4}$$

$$\text{the installment payment} = \frac{\text{price of the first product}}{\text{total times of intallments}}. \qquad (5)$$

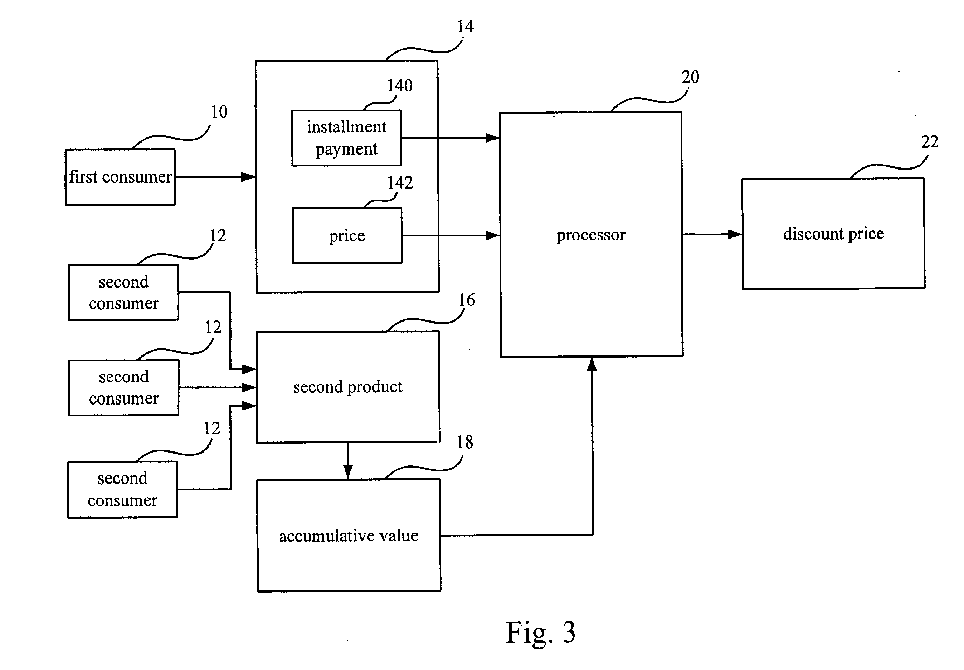

Reference is made to Fig. 3, which is a schematic diagram of a preferred embodiment in accordance with the present invention. As shown in the figure, the present invention includes at least a first product 14, at least a second product 122, at least a first consumer 10, at least a second product 16, an accumulative value 18 and a processor 20. Therein, after the first consumer 10 purchases a first product 14, each time when a second consumer 12 purchases a second product 16, the accumulative value 18 is increased to represent a total number of people, i.e. second consumers, who have purchased the second product 16. Then, the processor 20 calculates a discount price according to the accumulative value 18 so as to reduce an installment payment 140 of the first consumer 10. The present invention calculates a discount price 22 dynamically according to the situation of the second consumer's purchasing to provide a profit for the first consumer 10. Thereby, the goal of attracting more consumers to purchase is achieved.

Furthermore, the processor 20 of the present invention can uses a simple-interest method or a compound-interest method to calculate the discount price 22 according to the installment payment 140 or the price 142 of the first product 14. If the discount price 22 is calculated according to the installment payment 140 and the simple-interest method, the discount price 22 is 1500x15%=225 when the installment payment is 1500 and the discount ratio is 15%. Then, the discount price subtracts from the installment payment of the first consumer 10. Thus, the first consumer 10 only needs to pay 1500-225=1275. In this way, the present invention offers a discount for consumers during the period of installment.

Furthermore, if the discount price 22 is larger than the installment payment of the first consumer 10, the present invention records the difference between the discount price 22 and the installment payment of the first consumer 10 into a database. Thus, when the first consumer 10 wants to purchase a product or needs to pay next installment payment, the difference recorded in the database will be deducted from the price of the product or the next installment payment.

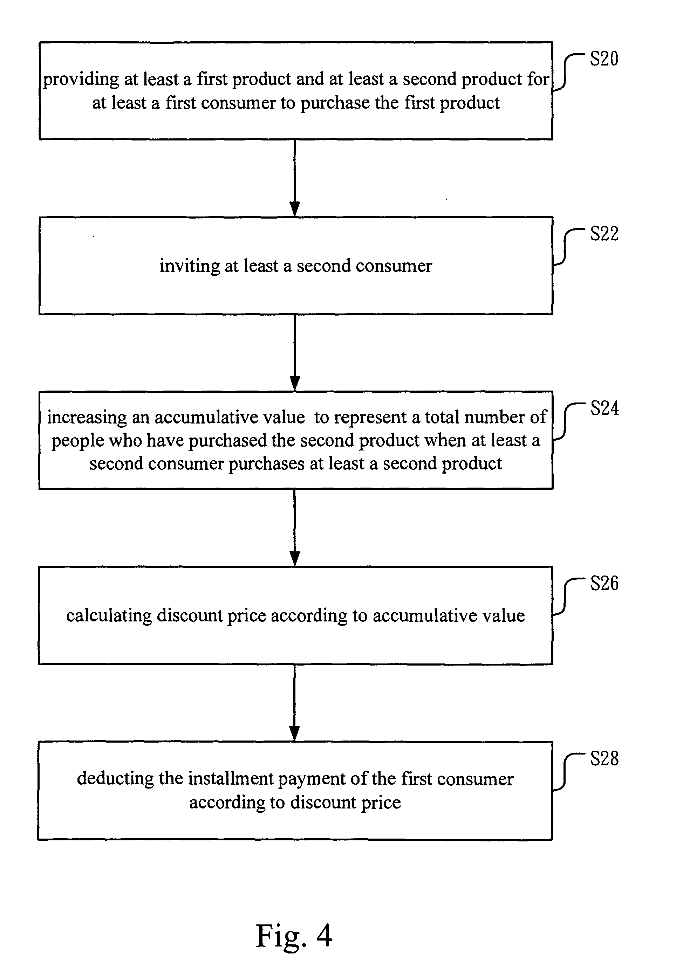

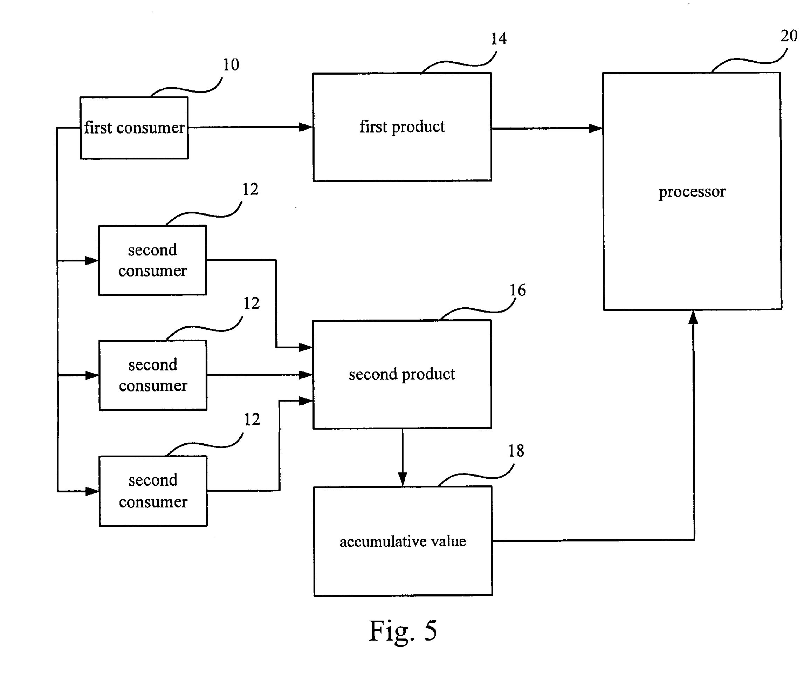

Reference is made to Fig. 4 together with Fig. 5. In this embodiment, as an example, the first consumer invites at least a second consumer. When the second consumer purchases products, the first consumer is benefited by a corresponding discount price. First, in step S20, the present invention provides at least a first product 14 and at least a second product 16 for at least a first consumer 10 to purchase the first product 14. Then, in step S22, the first consumer 10 invites at least a second consumer 12. After that, in step S24, when the second consumer 12 invited by the first consumer 10 purchases the second product 16, an accumulative value 18 is increased to represent a total number of people who have purchased the second product. Subsequently, the processor 20 performs step S26 and step S28. In step S26, a discount price is calculated according to accumulative value 18. The discount price is deducted from the installment payment of the first consumer 10. Thereby, a part of the profit for marketing the second product 16 is transferred to the first consumer 10 and thus the installment payment of the first consumer 10 is reduced. In this way, the first consumer 10 will be driven to invite the second consumer 18 or more other consumers to purchase products.

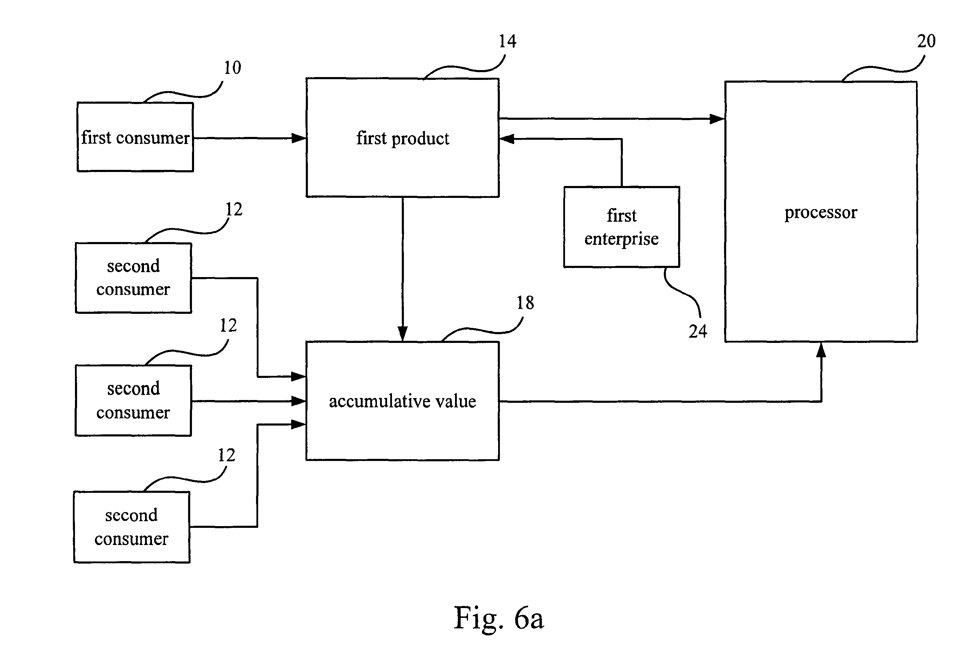

Reference is made to Fig. 6a. As shown in the figure, the system illustrated in Fig. 6a is similar as that shown in Fig. 3. The difference is that the system shown in Fig. 6a further includes a first enterprise 24, which provides at least a first product 14. After the first consumer 10 purchases a first product 14, each time when a second consumer 12 purchases a first product 14, an accumulative value 18 is increased to represent a total number of people (second consumers) who have purchased the first products 14. Then, the processor 20 calculates a discount price 22 according to the accumulative value 18.

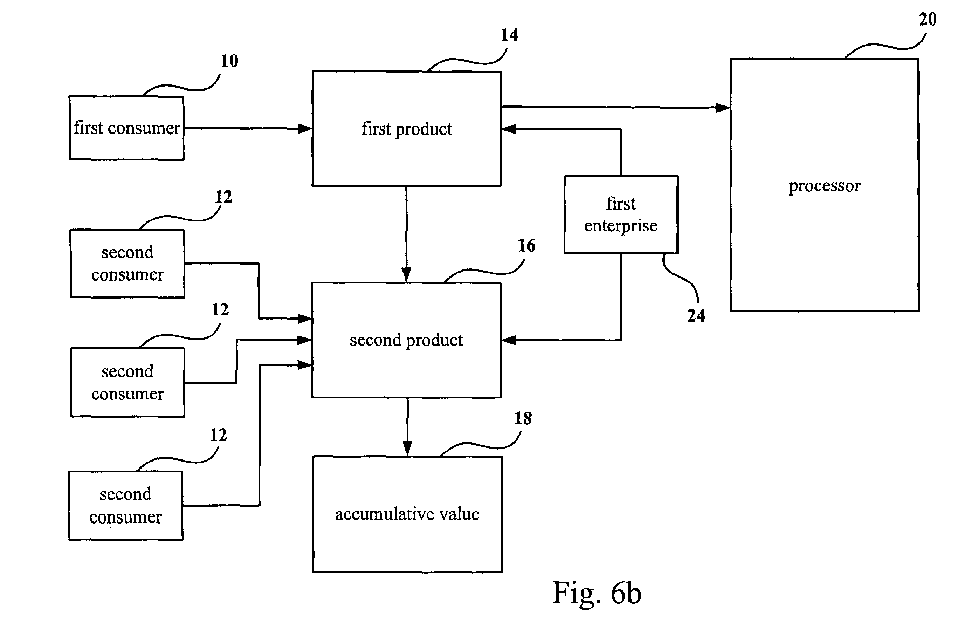

Furthermore, reference is also made to Fig. 6b. The first enterprise 24 provides the first product 14 and the second products 16. After the first consumer 10 purchases the first product 14, the first enterprise 24 uses the accumulative value and the processor 20 to calculate the discount price, which is deducted from the installment payment of the first consumer 10 who purchases the first product 14 from the first enterprise 24. Therein, the accumulative value 18 is increased to represent a total number of people (second consumers) who have purchased the second products 16.

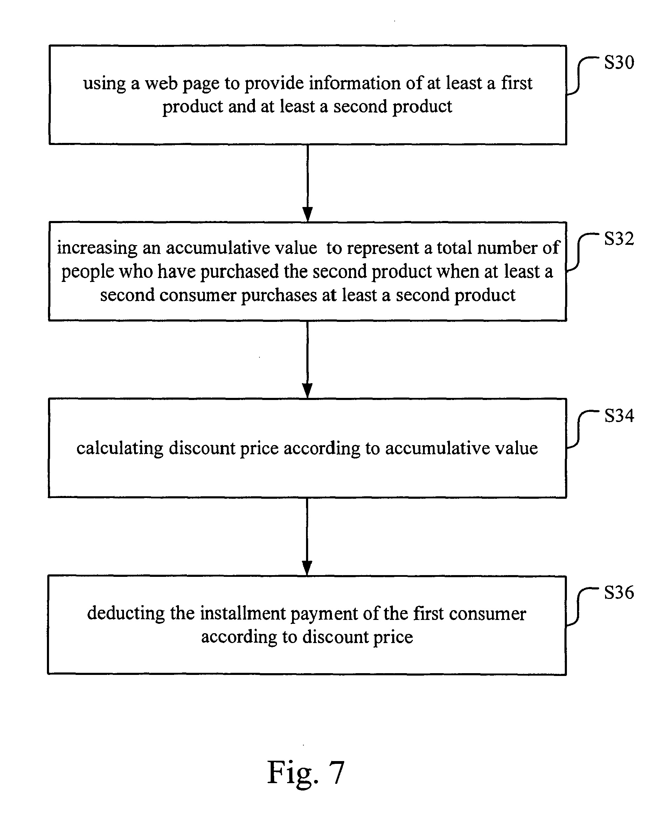

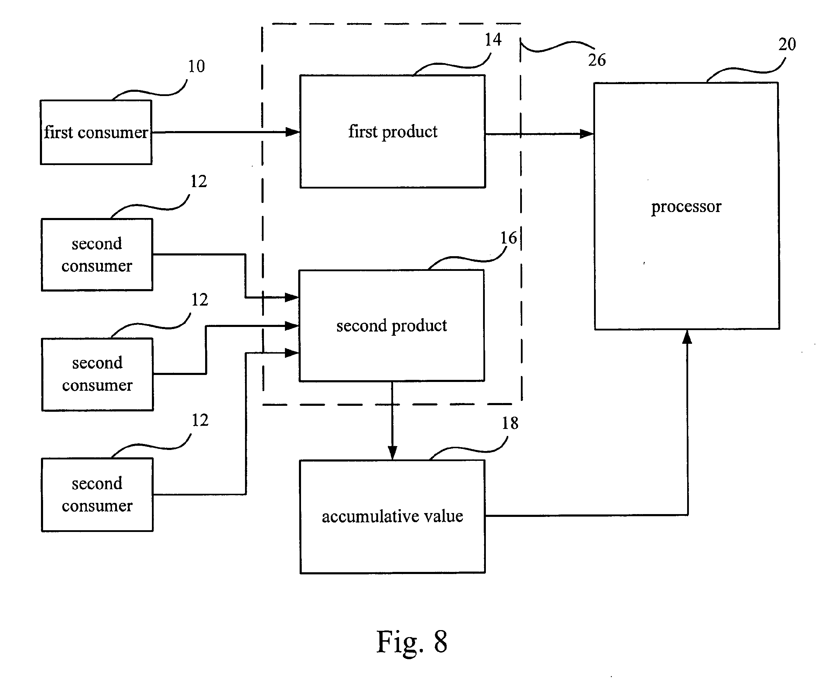

Reference is made to Fig. 7 and Fig. 8. As shown in the figures, the system of the present invention has a transaction server 24. In step S30, the transaction server 24 uses a web page to provide information of at least a first product and at least a second product. After the first consumer 10 obtains the information of the first product 14, the first consumer 10 can purchase the first product 14. After that, the accumulative value 18 and the processor 20 are used as described in step S32 to step S36 to reduce the installment payment of the first consumer. In this way, the first consumer 10 and the second consumer 12 can use the network technology to choose and purchase a product. Therein, step S32 and step S36 are the same as step S12 and step S16 mentioned in Fig. 2. Hence, these two steps are not detailed again.

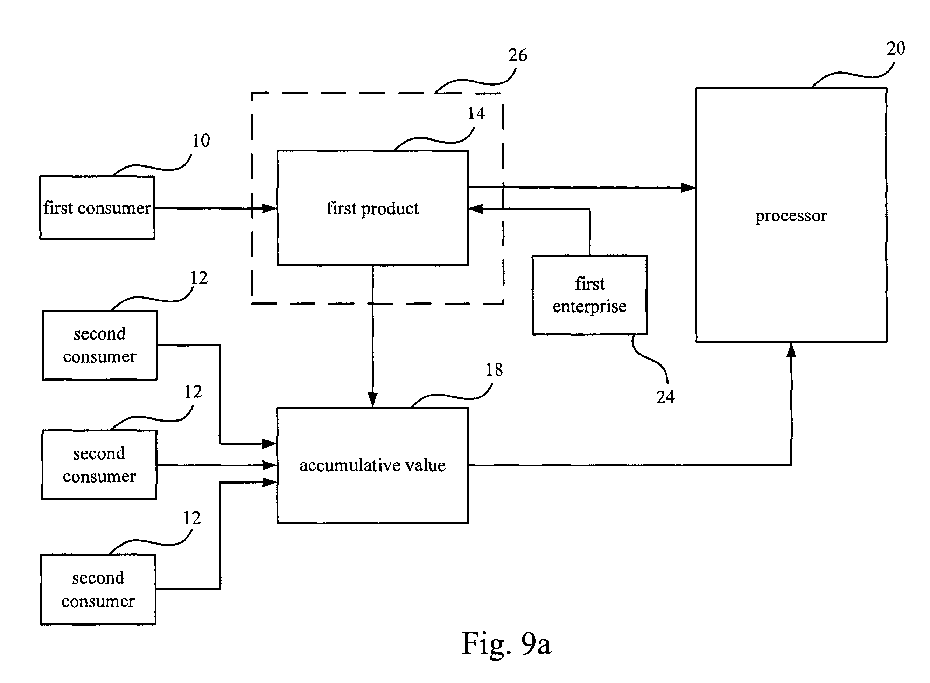

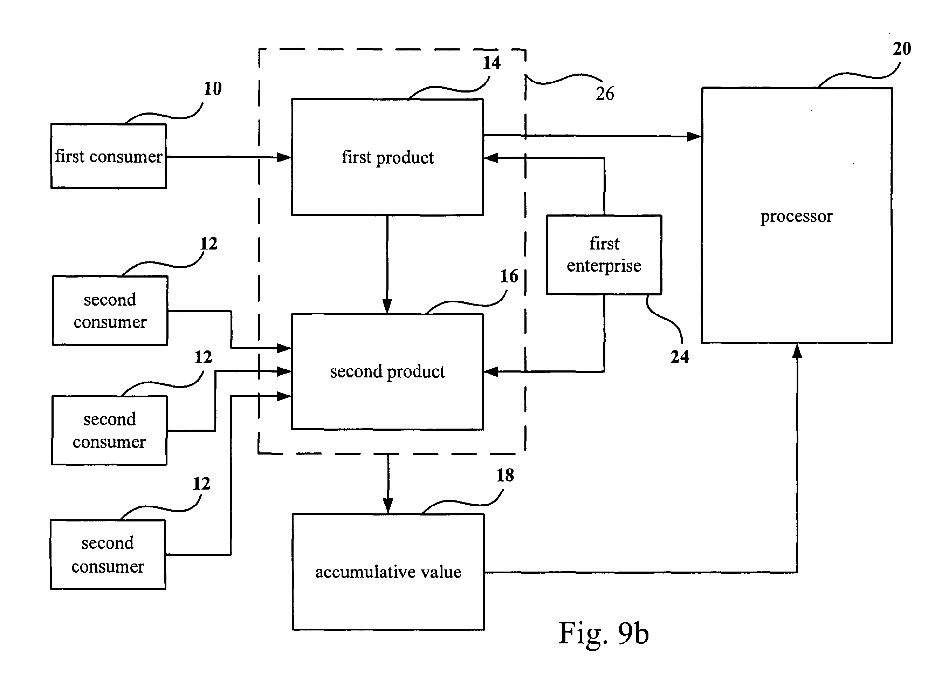

Reference is made to Fig. 9a and Fig. 9b. As shown in the figures, the system of the present invention has a transaction server 24, which is used to present at least a first product 14 provided by the first enterprise 24. Thus, when the first consumer 10 and the second consumer 12 connect to the transaction server 14 via a network, they can purchase the first product 14. In addition, the transaction server 24 can present different products provided by the first enterprise 24. Thus, the first consumer 10 and the second consumer 12 can purchase the first product 14 and the second product 16.

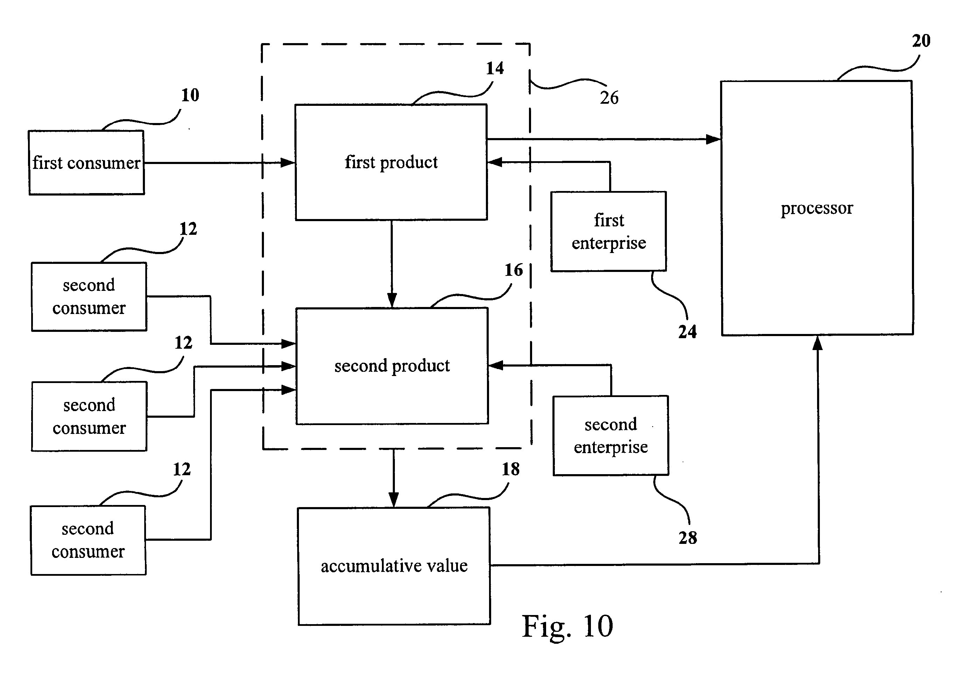

Reference is made to Fig. 10. As shown in the figure, the present invention further includes a transaction server 26, a first enterprise 24 and a second enterprise 28. The transaction server 26 is used to present at least a first product 14 provided by the first enterprise 24 and a second product 16 provided by the second enterprise 28. After the first consumer 10 purchases a product provided by the first enterprise 24, when a second consumer 18 purchases a product provided by the second enterprise 28, the transaction server 26 increases an accumulative value 18 to represent a total number of second consumers 18 who have purchased the second products 16. Then, the processor 20 calculates a corresponding discount price according to the accumulative value. Thereby, when the first consumer 10 and the second consumer 12 purchase the products provided by different enterprises, the first consumer 10 can also obtain the corresponding discount price.

To sum up, the present invention is related to a discount system for installment of trade articles and its method. Via the use of a transaction server, an accumulative value and a processor, when a second consumer purchases a second product via the transaction server, the accumulative value is increased to represent a total number of second consumers who have purchased the second products. Then, the processor calculates a discount price according to the accumulative value so as to reduce an installment payment of the first consumer. In this way, a discount profit is obtained by the consumers in the installment period of products that the consumers purchase.

Alt hough the present invention has been described with reference to the preferred embodiment thereof, it will be understood that the invention is not limited to the details thereof. Various substitutions and modifications have been suggested in the foregoing description, and other will occur to those of ordinary skill in the art. Therefore, all such substitutions and modifications are embraced within the scope of the invention as defined in the appended claims.

**Claims**

1. A discount method for installment of trade articles, comprising:

   providing at least a first product for at least a first consumer's purchasing;
   calculating an accumulative value when at least a second consumer purchases at least a second product;
   calculating a discount price according to the accumulative value; and
   reducing an installment payment of the first consumer according to the discount price.

2. The method as claimed in claim 1, further comprising:

   employing a web page to provide information related to the first product and the second product.

3. The method as claimed in claim 1, wherein

$$\text{the installment payment} = \frac{\text{price of the first product} + \text{total interest of the first product}}{\text{total times of intallments}}.$$

4. The method as claimed in claim 1, wherein the

$$\text{the installment payment} = \frac{\text{outstanding of the first product}}{\text{remaining times of intallments}} + \text{interest};$$

wherein the interest is decreased each time when the installment payment is paid.

5. The method as claimed in claim 1, wherein the

$$\text{the installment payment} = \frac{\text{price of the first product}}{\text{total times of intallments}} + \text{interest;}$$

wherein the interest is decreased each time when the installment payment is paid.

6. The method as claimed in claim 1, wherein the

$$\text{the installment payment} = \frac{\text{total interest of the first product}}{\text{total times of intallments}}.$$

7. The method as claimed in claim 1, wherein the

$$\text{the installment payment} = \frac{\text{price of the first product}}{\text{total times of intallments}}.$$

8. A discount system for installment of trade articles, comprising:

　　at least a first product;
　　at least a second product;
　　at least a first consumer;
　　at least a second consumer;
　　an accumulative value; and
　　a processor;

wherein, when the first consumer purchases the first product and the second consumer purchases the second product, the accumulative value is increased to represent a total number of people who have purchased the second product, the processor calculates a discount price according to the accumulative value so as to reduce an installment payment of the first consumer.

9. The system as claimed in claim 8, further comprising a transaction server for providing the first product and the second product.

10. The system as claimed in claim 8, wherein the second consumer is invited by the first consumer.

11. The system as claimed in claim 8, wherein the second consumer is not invited by the first consumer.

12. The system as claimed in claim 8, wherein the first product is the same as the second product.

13. The system as claimed in claim 8, wherein the first product and the second product are provided by different enterprises.

14. The system as claimed in claim 8, wherein the processor uses a simple-interest method or a compound-interest method to calculate the discount price according to the installment payment.

15. The system as claimed in claim 8, wherein the processor uses a simple-interest method or a compound-interest method to calculate the discount price according to a price of the first product.

Fig. 1 (prior art)

| providing at least a first product and at least a second product for at least a first consumer to purchase the first product via web page | S10 |

| increasing an accumulative value to represent a total number of people who have purchased the second product when at least a second consumer purchases at least a second product | S12 |

| calculating a discount price according to accumulative value | S14 |

| reducing the amount of the installment payment of the first consumer according to the discount price | S16 |

Fig. 2

Fig. 3

EP 1 739 604 A1

providing at least a first product and at least a second product for at least a first consumer to purchase the first product — S20

inviting at least a second consumer — S22

increasing an accumulative value to represent a total number of people who have purchased the second product when at least a second consumer purchases at least a second product — S24

calculating discount price according to accumulative value — S26

deducting the installment payment of the first consumer according to discount price — S28

Fig. 4

Fig. 5

Fig. 6a

EP 1 739 604 A1

first product — 14

second product — 16

accumulative value — 18

processor — 20

first enterprise — 24

first consumer — 10

second consumer — 12

second consumer — 12

second consumer — 12

Fig. 6b

14

using a web page to provide information of at least a first product and at least a second product    S30

increasing an accumulative value to represent a total number of people who have purchased the second product when at least a second consumer purchases at least a second product    S32

calculating discount price according to accumulative value    S34

deducting the installment payment of the first consumer according to discount price    S36

Fig. 7

Fig. 8

Fig. 9a

EP 1 739 604 A1

Fig. 9b

Fig. 10

EP 1 739 604 A1

**European Patent Office**

**DECLARATION**

which under Rule 45 of the European Patent Convention shall be considered, for the purposes of subsequent proceedings, as the European search report

Application Number

EP 05 01 3989

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims of the application are formulated to merely specify commonplace features relating to matter excluded from patentability under Art. 52(2) and (3) EPC and its technological implementation. Due to the attendant lack of resolution of technical definition present, the search division could not establish a technical problem addressed in order to be able to carry out a meaningful search into the state of the art (Rule 45 EPC). See also Guidelines Part B Chapter VIII. Accordingly no search has been carried out.

It should be noted that a search for prior art will be performed if, during any subsequent examination procedure, the applicant should succeed in arguing or amending the application such that the examining division considers such a search is necessary for the assessment of patentability.

The applicant's attention is drawn to the fact that a search may be carried out during examination following a declaration of no search under Rule 45 EPC, should the problems which led to the declaration being issued be overcome (see EPC Guideline C-VI, 8.5).

_____

| Place of search | Date | Examiner |
|---|---|---|
| The Hague | 11 August 2005 | Moynihan, M |

EPO FORM 1504 (P04C37)

**EP 1 739 604 A1**

## REFERENCES CITED IN THE DESCRIPTION

### Patent documents cited in the description

- TW 535079